# EUROPÄISCHE PATENTSCHRIFT

(11) **EP 1 263 689 B1**
(45) Veröffentlichungstag und Bekanntmachung des Hinweises auf die Patenterteilung: **24.08.2005**
(21) Anmeldenummer: 01923669.4
(22) Anmeldetag: 15.03.2001
(51) Int. Cl.: C04B 24/20

(54) **MINERALISCHE BAUSTOFFZUSAMMENSETZUNG UND IHRE VERWENDUNG**
MINERAL CONSTRUCTION-MATERIAL COMPOSITION AND THE USE THEREOF
COMPOSITION MINERALE D'UN MATERIAU DE CONSTRUCTION ET SON UTILISATION

(30) Priorität: 15.03.2000 DE 10012563
(43) Veröffentlichungstag der Anmeldung: 11.12.2002
(73) Patentinhaber: Heider, Hubert, 84028 Landshut (DE)
(72) Erfinder: HEIDER, Hubert, 84028 Landshut (DE); HEIDER, Johann, 84169 Altfraunhofen (DE); HEIDER, Franz-Josef, 85748 Garching (DE)
(74) Vertreter: Grünecker, Kinkeldey, Stockmair & Schwanhäusser Anwaltssozietät
(86) Internationale Anmeldenummer: PCT/EP2001/002985
(87) Internationale Veröffentlichungsnummer: WO 2001/068549

(56) Entgegenhaltungen:
- EP-A- 0 341 791
- DE-A- 3 619 363
- GB-A- 717 766
- US-A- 2 318 540
- DATABASE WPI Week 200019 Derwent Publications Ltd., London, GB; AN 2000-206567 XP002174111 & CN 1 239 086 A (QUWW-I)
- CHEMICAL ABSTRACTS, vol. 116, no. 18, 4. Mai 1992 (1992-05-04) Columbus, Ohio, US; abstract no. 179850r, J. LIAO: Seite 358; XP000285840 & CN 1 052 648 A (ID) 3. Juli 1991 (1991-07-03)
- DATABASE WPI Week 198049 Derwent Publications Ltd., London, GB; AN 1980-87924C XP002174112 & SU 729 158 A (CASI - R)

## Beschreibung

Die vorliegende Erfindung betrifft eine mineralische Baustoffzusammensetzung, enthaltend ein Additiv, das bei dem Fertigprodukt zu einer verbesserten Ausbildung an Luftporen führt, sowie die Verwendung dieser mineralischen Baustoffzusammensetzung.

Mineralische Baustoffzusammensetzungen, wie Beton und Putzmörtel, enthalten Bindemittel, Zuschlagstoffe, Wasser und gegebenenfalls Zusatzstoffe und Farbstoffe. Bei Beton ist das Bindemittel üblicherweise Zement. Bei Putzmörtel wird neben Zement auch aus Kalk, Kalkzement, Kalkgips und Gips als Bindemittel ausgewählt. Übliche Zuschlagstoffe beinhalten Sand, Kies, Kiessand, Splitt und Schlacke. Mineralische Baustoffzusammensetzungen können weiterhin übliche Zusatzstoffe, die die Eigenschaften der Baustoffzusammensetzung beeinflussen, enthalten.

Außerdem können gegebenenfalls verschiedene Zusatzmittel (Additive) in mineralischen Baustoffzusammensetzungen enthalten sein, die dazu dienen, durch chemische und/oder physikalische Wirkung die Eigenschaften der Baustoffzusammensetzung, wie die Verarbeitbarkeit, das Erhärten oder Erstarren, zu ändern. Im Gegensatz zu den Zusatzstoffen sind Zusatzmittel nur in sehr geringen Mengen in der Baustoffzusammensetzung enthalten. Beispielsweise werden bei Betonzusatzmitteln Betonverflüssiger, Erstarrungsverzögerer, Erstarrungs- und Erhärtungsbeschleuniger, Einpreßhilfen bei Spannbeton, Betondichtungsmittel und Luftporenbildner unterschieden. Die Verwendung von sulfonierten organischen Verbindungen ist insbesondere bei Betonverflüssigem und Luftporenbildnern bekannt.

Betonverflüssiger verbessern die Verarbeitbarkeit des Betons oder vermindern den erfordertichen Wassergehalt und werden auch als Fließmittel bezeichnet. Sie sind auf der Basis von Netzmitteln, Ligninsulfonaten, sulfonierten Polykondensaten, wie sulfoniertem Naphthatinformaldehydkondensat, sulfoniertem Melaminformaldehydkondensat und sulfoniertem Phenolformaldehydkondensat, aufgebaut.

Luftporenbildner führen zur Bildung von kugelförmigen Poren im Beton, in denen sich die Luft verteilt. Diese wirken wie ein elastischer, schmierender Feinstzuschlag. Die Plastizität des Frischbetons wird durch verbesserte Dispergierung des Zements erhöht, der Wasseranspruch dadurch vermindert. Zugleich sinkt die Neigung zum Entmischen. Im erhärteten Beton vermindern die Poren die kapillare Saugfähigkeit, weil sie mit ihrem größeren Durchmesser die Kapillaren unterbrechen und die Feuchtigkeit in die Poren ausweichen kann. Als Wirkstoffe dienen Harze, Fettsäuren, sulfonierte Kohlenwasserstoffe und Eiweißstoffe.

Die US-A-4 624 711 offenbart Leichbetonprodukte, insbesondere geschäumte Leichtaggregate, enthaltend selbsthärtende Flugasche, ein oberflächenaktives Mittel auf Sulfatbasis in Form eines Schaums, einen Beschleuniger und ein Additiv, das u.a. aus Zement ausgewählt werden kann. Das oberflächenaktive Mittel auf Sulfatbasis wird vorzugsweise aus anionischen oberflächenaktiven Mitteln in Form von Ammonium- oder Calciumsalzen ausgewählt. Spezielle Beispiele beinhalten u.a. das Amin- oder das Ammoniumsalz von Dodecylbenzolsulfonsäure und Calciumdodecylbenzolsulfonat. Die Aggregate führen zu einer verbesserten Verarbeitbarkeit des Betons und sind kompatibel mit dem Zement- und Wassergemisch, woraus der Beton hergestellt wird.

In der US-A-4 019 916 werden Luftporenbildner beschrieben, die Zement und Mörtel zugemischt werden können. Als Luftporenbildner wird ein wasserlösliches Sulfosuccinnamat eingesetzt. Vorzugsweise wird dieses Mittel mit einem wasserlöslichen Alkylbenzolsulfonat kombiniert. Der mit diesem Additiv hergestellte Mörtel besitzt den gewünschten Luftporengehalt bei gleichzeitiger Druckfestigkeit.

Die GB-A-1 086 241 offenbart Formmaterialien mit guter Festigkeit und Härte nach dem Erstarren. Das Gemisch enthält ein herkömmliches erstes Bindemittel auf Natriumsilikatbasis und ein zweites Bindemittel oder einen Härter und ein oberflächenaktives Mittel. Das zweite Bindemittel dient zum Erstarren und kann u.a. Zement und Schlacke sein. Das oberflächenaktive Mittel ist vorzugsweise eine flüssige anionische Mischung aus Alkylarylsulfonaten und Alkylsulfaten oder ein flüssiges Natriumalkylnaphthatinsulfonat. Es verfügt über schäumende Eigenschaften und ist mit den Bindemitteln kompatibel.

Der Einsatz von herkömmlichen Betonverflüssigem und Luftporenbildnern kann jedoch nicht alle Anforderungen, die an den fertigen mineralischen Baustoff gestellt werden, erfüllen. Beispielsweise kommt es bei Verputz und Betonfertigteilen, die der Witterung ausgesetzt sind, insbesondere zementgebundenen Mauer- und Pflastersteinen und verputzten Wänden zu Ausblühungen. Die Ausblühungen zeigen sich in Form von weißlichem Schleier bis hin zu dicken weißen Krusten, die die Oberfläche des Betons, bzw. des Verputzes, verunzieren. Diese Ausblühungen machen sich insbesondere bei farbigem Beton und Putz bemerkbar, da sie vor einem dunklen Hintergrund besonders gut sichtbar sind.

Die Entstehung von Ausblühungen im Beton und Putz beruht auf dem folgenden Prinzip. Beim Abbinden des Bindemittels, z.B. des Zements, entsteht freies Calciumhydroxid, welches in geringem Maße im Wasser löslich ist. Daher kann es entweder bereits im Anmachwasser des Frischbetons bzw. Frischputzes gelöst an die Oberfläche diffundieren oder auch im erhärteten Beton oder Putz durch Einwirkung von Regen oder Tau entstehen. An der Beton- bzw. Putzoberfläche reagiert das Calciumhydroxid mit Kohlendioxid unter Bildung von wasserunlöslichem Calciumcarbonat, das als weiße Ablagerungen sichtbar wird. Ausblühungen, die während der Härtung des Baustoffs entstehen, werden Primärausblühung genannt, jene, die im Laufe der Bewitterung des erhärteten Baustoffs auftreten, bezeichnet man als Sekundärausblühungen.

Die Vermeidung von Ausblühungen konnte bisher nicht gelöst werden. Im Hinblick auf den hohen Kalkgehalt im Beton bzw. Putz ist ein Zusatz, der Calciumhydroxid bindet, nicht realisierbar, da es dabei zu weiteren wasserlöslichen Verbindungen und Nebenprodukten kommen würde, die zu neuen Schwierigkeiten führen würden. Eine Imprägnierung des Betons mit Silikonen oder Stearaten verspricht ebenfalls keinen Erfolg, da diese nur das Eindringen von Wasser im flüssigen Zustand verhindern.

Außerdem sind die kugelförmigen Poren, die durch die Verwendung von herkömmlichen Luftporenbildnern in Beton oder Putz erhalten werden, zwar in der Lage, Feuchtigkeit aufzunehmen, so daß sich die Ausdehnung des Wassers beim Gefrieren ohne Sprengwirkung vollzieht und dadurch den Beton oder Putz nicht beschädigt, allerdings eignen sich die herkömmlichen Luftporenbildner durch diese Feuchtigkeitsaufnahme nicht für Putzmörtel, insbesondere Mauerentfeuchtungsputz. Bei Putzmörtel kommt es ganz im Gegenteil darauf an, daß Wasser nicht in die Wände eindringen kann bzw. daß die Wände entfeuchtet werden. Weiterhin kommt es bei der Verwendung von herkömmlichen Luftporenbildnern in Beton zu einer geringen Säurebeständigkeit. Ähnlich wie das Wasser sammeln sich Säuren in den Poren und führen somit im Inneren des Betons zur Korrosion des Baustoffes.

Es ist deshalb die Aufgabe der vorliegenden Erfindung, eine mineralische Baustoffzusammensetzung zur Verfügung zu stellen, bei der die vorstehend genannten Nachteile nicht auftreten. Insbesondere sollen Betonausblühungen sowie eine Feuchtigkeitsaufnahme vermieden werden, wobei gleichzeitig der gewünschte Zustand des Baustoffes, wie ein hoher Widerstand gegenüber chemischen Belastungen, eine ausgezeichnete Homogenität und eine gute Druckfestigkeit, beibehalten und wenn möglich verbessert werden.

Diese Aufgabe wird gelöst durch eine mineralische Baustoffzusammensetzung, enthaltend als Additiv eine Mischung, umfassend
(a) mindestens ein Alkylnaphthalinsulfonat,
(b) mindestens ein Alkylbenzolsulfonat und
(c) mindestens ein Alkalisulfat.

Die vorliegende Erfindung betrifft ebenfalls die Verwendung eines Additivs, umfassend
(a) mindestens ein Alkylnaphthalinsulfonat,
(b) mindestens ein Alkylbenzolsulfonat und
(c) mindestens ein Alkalisulfat
in einer mineralischen Baustoffzusammensetzung.

Die erhaltene erfindungsgemäße mineralische Baustoffzusammensetzung wird als Mauerentfeuchtungsputz, für zementgebundene Mauer- oder Pflastersteine, Luftporenbeton, Estrich oder als Belag für Straßen oder Start- und Landebahnen von Flughäfen verwendet.

Die erfindungsgemäße mineralische Baustoffzusammensetzung umfaßt allgemein übliche Baustoffzusammensetzungen, wie Beton, Mörtel und Putz.

Die erfindungsgemäße mineralische Baustoffzusammensetzung enthält das Additiv üblicherwese in einer Menge von 10 bis 3000 g/m³, vorzugsweise 100 bis 1000 g/m³ der Baustoffzusammensetzung. Die speziellen Mengen des Additivs sind normalerweise abhängig von der Verwendung der erfindungsgemäßen mineralischen Baustoffzusammensetzung. Bei zementgebundenen Mauer- oder Pflastersteinen ist die Additivmenge vorzugsweise relativ gering und beträgt 10 bis 600 g/m³, vorzugsweise 20 bis 500 g/m³ besonders bevorzugt 100 bis 200 g/m³ der Baustoffzusammensetzung. Für Beton und insbesondere Luftporenbeton und Estriche liegt die Menge Additiv üblicherweise etwas höher, vorzugsweise von 100 bis 2500 g/m³, noch bevorzugter 200 bis 2000 g/m³. Für Mauerentfeuchtungsputz sind die Mengen ähnlich und betragen von 400 bis 2500 g/m³, vorzugsweise 500 bis 2000 g/m³ der Baustoffzusammensetzung.

Neben dem Additiv enthält die erfindungsgemäße mineralische Baustoffzusammensetzung herkömmliche Bestandteile, wie Bindemittel, Zuschlagstoffe, Wasser und gegebenenfalls Zusatzstoffe und Farbstoffe, in üblichen Mengen. Beispiele des Bindemittels beinhalten Zement (für Putzmörtel und Beton), Kalk, Kalkzement, Kalkgips und Gips (für Putzmörtel) sowie Mischungen davon. Die Zusatzschlagstoffe werden aus herkömmlichen Zuschlagstoffen ausgewählt und je nach Verwendung eingesetzt. Sie beinhalten Sand, Kies, Kiessand, Splitt und Schlacke sowie Mischungen davon.

Wie vorstehend beschrieben, enthält das erfindungsgemäß verwendete Additiv mindestens ein Alkylnaphthalinsulfonat. Diese Komponente ist in dem Additiv üblicherweise in einer Menge von 40 bis 75 Gew.%, vorzugsweise 45 bis 75 Gew.%, insbesondere bevorzugt 50 bis 65 Gew.%, bezogen auf das Additiv, enthalten. Die Alkylgruppe beinhaltet eine verzweigte oder unverzweigte Kohlenstoffkette mit 1 bis 30, vorzugsweise 10 bis 20 Kohlenstoffatomen.

Weiterhin enthält das erfindungsgemäß verwendete Additiv mindestens ein Alkylbenzolsulfonat. Diese Komponente ist in dem Additiv üblicherweise in einer Menge von 5 bis 20 Gew.%, vorzugsweise 9 bis 15 Gew.%, bezogen auf das Additiv, enthalten. Die Alkylgruppe beinhaltet verzweigte und unverzweigte Kohlenstoffketten mit 1 bis 30 Kohlenstoffatomen, vorzugsweise 1 bis 10 Kohlenstoffatomen.

Ein weiterer Bestandteil des erfindungsgemäß verwendeten Additivs ist mindestens ein Alkalisulfat. Die Menge dieser Komponente im Additiv beträgt üblicherweise 5 bis 30 Gew.%, vorzugsweise 8 bis 25 Gew.%, bezogen auf das Additiv. Das Alkalisulfat wird aus üblichen Sulfaten von Alkalimetallen, wie Lithium, Natrium und Kalium, ausgewählt. Besonders bevorzugt wird Natriumsulfat eingesetzt.

Das erfindungsgemäß verwendete Additiv enthält vorzugsweise weiterhin mindestens einen aromatischen Kohlenwasserstoff. Diese Komponente ist, wenn erwünscht, in dem Additiv üblicherweise in einer Menge von 3 bis 16 Gew.%, vorzugsweise 4 bis 10 Gew.%, bezogen auf das Additiv, enthalten. Der aromatische Kohlenwasserstoff wird vorzugsweise aus aromatischen Verbindungen mit mindestens einem Phenylgerüst ausgewählt. Besonders bevorzugt wird die Komponente aus substituiertem oder unsubstituiertem Naphthalin und Gemischen davon gewählt. Die Substitution kann ein- oder mehrfach vorliegen und besonders bevorzugt ist mono-, di-, tri- und/oder tetrasubstituiertes Naphthalin. Der Substituent beinhaltet Alkyl-, Alkoxy-, Halogen- und Nitrogruppen, noch bevorzugter verzweigte oder unverzweigte Alkylgruppen mit 1 bis 10, vorzugsweise 1 bis 5 Kohlenstoffatomen.

Das Additiv kann weitere organische oder anorganische Substanzen, wie oberflächenaktive Mittel, aliphatische Kohlenwasserstoffe und Metallsalze, enthalten. Übliche Träger- und Hilfsstoffe können ebenfalls verwendet werden.

Die Bestandteile des Additivs können den weiteren Komponenten der erfindungsgemäßen mineralischen Baustoffzusammensetzung einzeln oder bereits vorgemischt zugegeben werden. Es ist bevorzugt, die Komponenten des Additivs vorzumischen und das erhaltene Gemisch in der vorstehend genannten Menge für den jeweiligen Zweck der erfindungsgemäßen mineralischen Baustoffzusammensetzung zuzufügen.

Vorzugsweise erfolgt die Zugabe des Additivs zu der Anmischung für die mineralische Baustoffzusammensetzung, umfassend Bindemittel, Zuschlagstoffe und gegebenenfalls Zusatzstoffe und Farbstoffe, vor der Wasserzugabe. Dadurch kann eine gute Vermischung des Additivs in der mineralischen Baustoffzusammensetzung gewährleistet werden. Nach Abschluß des Mischvorgangs wird die entsprechende Wassermenge hinzugegeben, um das Fertigprodukt herzustellen. Die erhaltene erfindungsgemäße mineralische Baustoffzusammensetzung eignet sich als Mauerentfeuchtungsputz, für zementgebundene Mauer- oder Pflastersteine, als Luftporenbeton, als Estrich oder als Belag für Straßen oder Start- und Landebahnen von Flughäfen.

Das Fertigprodukt zeichnet sich insbesondere durch das Vorhandensein von geschlossenen Mikro-Luftporen aus. Als Folge wird die Saugfähigkeit des erhaltenen Produkts stark eingeschränkt. Dies verhindert, daß Calciumhydroxid an die Oberfläche diffundieren kann und nach Bildung von Calciumcarbonat an der Oberfläche abgelagert wird. Ausblühungen können somit stark vermindert oder wesentlich reduziert werden.

Durch die Größe der Mikro-Luftporen kann Wasser nur in einem sehr geringen Ausmaß in die Poren eindringen, so daß die Poren selbst über einen längeren Zeitraum keine Feuchtigkeit aufnehmen. Das Fertigprodukt eignet sich deshalb besonders gut als Innen- und Außenputz und insbesondere als Mauerentfeuchtungsputz, da die Poren eine Atmung erlauben, jedoch keine Feuchtigkeit aufnehmen.

Die Größe der Mikro-Luftporen verhindert ebenfalls das Eindringen von aggressiven Chemikalien, wie Säuren, in den Baustoff. Deshalb eignet sich die erfindungsgemäße Baustoffzusammensetzung auch ausgezeichnet als Straßenbelag, insbesondere für Autobahnen, sowie als Belag für Start- und Landebahnen von Flughäfen.

## Patentansprüche

1. Mineralische Baustoffzusammensetzung, enthaltend als Additiv eine Mischung, umfassend
(a) mindestens ein Alkylnaphthalinsulfonat,
(b) mindestens ein Alkylbenzolsulfonat und
(c) mindestens ein Alkalisulfat.

2. Mineralische Baustoffzusammensetzung nach Anspruch 1, **dadurch gekennzeichnet, daß** das Additiv in einer Menge von 10 bis 3000 g/m³ der Baustoffzusammensetzung enthalten ist.

3. Mineralische Baustoffzusammensetzung nach Anspruch 1 oder 2, **dadurch gekennzeichnet, daß** das Additiv in einer Menge von 100 bis 1000 g/m³ der Baustoffzusammensetzung enthalten ist.

4. Mineralische Baustoffzusammensetzung nach einem der Ansprüche 1 bis 3, **dadurch gekennzeichnet, daß** das Additiv 40 bis 75 Gew.-% der Komponente (a) enthält.

5. Mineralische Baustoffzusammensetzung nach einem der Ansprüche 1 bis 4, **dadurch gekennzeichnet, daß** das Additiv 5 bis 20 Gew.-% der Komponente (b) enthält.

6. Mineralische Baustoffizusammensetzung nach einem der Ansprüche 1 bis 5, **dadurch gekennzeichnet, daß** das Additiv 5 bis 30 Gew.-% der Komponente (c) enthält.

7. Mineralische Baustoffzusammensetzung nach einem der Ansprüche 1 bis 6, **dadurch gekennzeichnet, daß** die Komponente (c) Natriumsulfat ist.

8. Mineralische Baustoffzusammensetzung nach einem der Ansprüche 1 bis 7, **dadurch gekennzeichnet, daß** das Additiv weiterhin
(d) mindestens einen aromatischen Kohlenwasserstoff
enthält.

9. Mineralische Baustoffzusammensetzung nach Anspruch 8, **dadurch gekennzeichnet, daß** das Additiv 3 bis 16 Gew.-% der Komponente (d) enthält.

10. Mineralische Baustoffzusammensetzung nach Anspruch 8 oder 9, **dadurch gekennzeichnet, daß** die Komponente (d) ausgewählt wird aus substituiertem oder unsubstituiertem Naphthalin und Gemischen davon.

11. Verwendung der mineralischen Baustoffzusammensetzung nach einem der Ansprüche 1 bis 10 als Mauerentfeuchtungsputz.

12. Verwendung der mineralischen Baustoffzusammensetzung nach einem der Ansprüche 1 bis 10 für zementgebundene Mauer- oder Pflastersteine.

13. Verwendung der mineralischen Baustoffzusammensetzung nach einem der Ansprüche 1 bis 10 als Luftporenbeton.

14. Verwendung der mineralischen Baustoffzusammensetzung nach einem der Ansprüche 1 bis 10 als Estrich.

15. Verwendung der mineralischen Baustoffzusammensetzung nach einem der Ansprüche 1 bis 10 als Belag für Straßen oder Start- und Landebahnen von Flughäfen.

16. Verwendung eines Additivs, umfassend
(a) mindestens ein Alkylnaphthalinsulfonat,
(b) mindestens ein Alkylbenzolsulfonat und
(c) mindestens ein Alkalisulfat
in einer mineralischen Baustoffzusammensetzung.

## Claims

1. Mineral building material composition containing as additive a mixture comprising
(a) at least one alkyl naphthalene sulphonate,
(b) at least one alkylbenzenesulphonate and
(c) at least one alkali sulphate.

2. Mineral building material composition as claimed in claim 1, **characterised in that** the additive is contained in a quantity of 10 to 3000 g/m³ of the building material composition.

3. Mineral building material composition as claimed in claim 1 or 2, **characterised in that** the additive is contained in a quantity of 100 to 1000 g/m³ of the building material composition.

4. Mineral building material composition as claimed in any one of claims 1 to 3, **characterised in that** the additive comprises 40 to 75 weight-% of component (a).

5. Mineral building material composition as claimed in any one of claims 1 to 4, **characterised in that** the additive comprises 5 to 20 weight-% of component (b).

6. Mineral building material composition as claimed in any one of claims 1 to 5, **characterised in that** the additive comprises 5 to 30 weight % of component (c).

7. Mineral building material composition as claimed in any one of claims 1 to 6, **characterised in that** the component (c) is sodium sulphate.

8. Mineral building material composition as claimed in any one of claims 1 to 7, **characterised in that** the additive further comprises (d) at least one aromatic hydrocarbon.

9. Mineral building material composition as claimed in claim 8, **characterised in that** the additive comprises 3 to 16 weight % of the component (d).

10. Mineral building material composition as claimed in claim 8 or 9, **characterised in that** the component (d) is selected from substituted or unsubstituted naphthalene and mixtures thereof.

11. Use of the mineral building material composition as claimed in any one of claims 1 to 10 as wall dehydrating plaster.

12. Use of the mineral building material composition as claimed in any one of claims 1 to 10 for bricks and pavers embedded in cement.

13. Use of the mineral building material composition as claimed in any one of claims 1 to 10 as air-entrained concrete.

14. Use of the mineral building material composition as claimed in any one of claims 1 to 10 as plaster floor.

15. Use of the mineral building material composition as claimed in any one of claims 1 to 10 as surface for roads or starting and landing strips at airports.

16. Use of an additive, comprising
(a) at least one alkyl naphthalene sulphonate,
(b) at least one alkylbenzenesulphonate and
(c) at least one alkali sulphate
in a mineral building material composition.

## Revendications

1. Composition de matériaux de construction minérale, contenant comme additif un mélange comprenant
(a) au moins un sulfonate alkylnaphtalène,
(b) au moins un sulfonate d'alcoylebenzène
(c) au moins un sulfate alcalin.

2. Composition de matériaux de construction minérale conformément à la revendication 1, **caractérisée par le fait que** l'additif soit contenu dans une quantité allant de 10 à 3000g/m³ de la composition de matériaux de construction.

3. Composition de matériaux de construction minérale conformément à la revendication 1 ou 2, **caractérisée par le fait que** l'additif soit contenu dans une quantité allant de 100 à 1000 g/m³ de la composition de matériaux de construction.

4. Composition de matériaux de construction minérale conformément à une des revendications 1 - 3, **caractérisée par le fait que** l'additif contient entre 40 et 75 % du poids du composant (a).

5. Composition de matériaux de construction minérale conformément à une des revendications 1 - 4, **caractérisée par le fait que** l'additif contient entre 5 et 20 % du poids du composant (b).

6. Composition de matériaux de construction minérale conformément à une des revendications 1 - 5, **caractérisée par le fait que** l'additif contient entre 5 et 30 % du poids du composant (c).

7. Composition de matériaux de construction minérale conformément à une des revendications 1 - 6, **caractérisée par le fait que** le composant (c) est du sulfate de sodium.

8. Composition de matériaux de construction minérale conformément à une des revendications 1 - 7, **caractérisée par le fait que** l'additif contient en outre (d) au moins un hydrocarbure aromatique.

9. Composition de matériaux de construction minérale conformément à la revendication 8, **caractérisée par le fait que** l'additif contient entre 3 et 16% du poids de ce composant (d).

10. Composition de matériaux de construction minérale conformément à revendication 8 ou 9, **caractérisée par le fait que** l'additif (d) est sélectionné à partir de naphtaline substituée ou non substituée et des mélanges de celles-ci.

11. Utilisation de la composition de matériaux de construction minérale conformément à une des revendications 1-10, en tant qu'enduit de déshumidification de murs.

12. Utilisation de la composition de matériaux de construction minérale conformément à une des revendications 1-10, pour des pierres de taille ou pierres à paver à base de ciment.

13. Utilisation de la composition de matériaux de construction minérale conformément à une des revendications 1-10, en tant que béton aéré.

14. Utilisation de la composition de matériaux de construction minérale conformément à une des revendications 1-10, en tant que chape en mortier.

15. Utilisation de la composition de matériaux de construction minérale conformément à une des revendications 1-10, en tant que couche pour les routes ou les pistes de décollage et d'atterrissage des aéroports.

16. Utilisation d'un additif, comprenant
(a) au moins un sulfonate alkylnaphtalène
(b) au moins un sulfonate d'alcoylebenzène et
(c) au moins un sulfate alcalin
dans une composition de matériaux de construction minérale
